# EUROPEAN PATENT SPECIFICATION

(11) **EP 1 016 156 B1**
(45) Date of publication and mention of the grant of the patent: **27.08.2003**
(21) Application number: 98929897.1
(22) Date of filing: 26.06.1998
(51) Int. Cl.: H01M 10/00

(54) **LITHIUM ION SECONDARY BATTERY AND MANUFACTURING METHOD OF THE SAME**
LITHIUM-IONEN SEKUNDÄRBATTERIE UND VERFAHREN ZU DEREN HERSTELLUNG
ACCUMULATEUR ELECTRIQUE A IONS LITHIUM ET PROCEDE DE FABRICATION

(30) Priority: 27.06.1997 KR 2800473; 27.06.1997 KR 2800474; 24.01.1998 KR 2200026
(43) Date of publication of application: 05.07.2000
(73) Proprietor: LG CHEMICAL LIMITED, Seoul 150-721 (KR)
(72) Inventor: AHN, Soon-Ho, Yousung-gu, Taejon 305-345 (KR); CHUNG, Geun-Chang, Yousung-gu, Taejon 305-345 (KR); LIM, Mi-Ra, Yousung-gu, Taejon 305-340 (KR); JUN, Sung-Hui, Yousung-gu, Taejon 305-340 (KR); BAE, Joon-Sung, Yousung-gu, Taejon 305-340 (KR); KWAK, Mi-Seon, Jung-gu, Taejon 301-211 (KR)
(74) Representative: Brandenburg, Thomas, Dr.
(86) International application number: KR9800183
(87) International publication number: WO99000001

(56) References cited:
- EP-A2- 0 717 457
- DATABASE WPI ON EPO, week 9747, LONDON: DERWENT PUBLICATIONS LTD., AN 97-506269, Class L03, X16; & JP 9161807 A (WAKAMATSU NETSUREN KK).
- DATABASE WPI ON EPO, week 9531, LONDON: DERWENT PUBLICATIONS LTD., AN 95-234877, Class W04, X16; & JP 7142052 A (SUMITOMO ELECTRIC IND CO).
- PATENT ABSTRACTS OF JAPAN, Vol. 12, No. 357, (E-662), 1988; & JP 63114057 A (SANYO ELECTRIC CO LTD).

## Description

### BACKGROUND OF THE INVENTION

### Field of the Invention

The present invention relates to a lithium ion secondary battery having a low internal resistance and a greatly increased capacity, and more particularly to an improved lithium ion secondary battery constructed by selecting a composite electrode which is prepared by adding a conductive filament to electrode active materials during preparation of the battery, and a manufacturing method of the same.

### Description of the Related Art

While a lithium ion battery developed heretofore has a high energy density and a specific energy, it has a problem of high internal resistance. Accordingly, a practical capacity of the battery is prone to decline due to a rapid drop of battery voltage during discharging at a high speed. Because of such a disadvantage, it is known that lithium battery is inefficient in electronic devices which require high current. One of the reasons of a high internal resistance and a slow recharging or discharging speed of the lithium battery is a low electrical conductivity of materials and structures of conventional electrodes.

In general, an electrode of a lithium ion battery comprises powder type active materials into which lithium ion can be intercalated and an adhesive polymer to fix the active material on a collector. Active materials such as carbonaceous materials as well as lithium metal oxides such LiCoO₂, LiMn₂O₄, LiNiO₂ have a poor electronic conductivity.

Also, particles of these active materials expand and contact repeatedly when lithium ions are intercalated or deintercalated. Stress resulting from intercalation or deintercalation along with swelling of an adhesive by an electrolyte causes loss of point contacts between particles of active materials. Accordingly, it is necessary to form electron delivery passages from collector to active materials while preparing the electrode for a high conductivity. In the case that the active materials of the anode are graphite or other type of carbon materials, the problem of conductivity is not as severe as in case of cathode. However, an additional conductor needs to be added depending on the kinds of the battery and the objects for designing battery.

For this purpose, powders such as graphite in an average diameter of about 1∼20 µm or carbon black of an average size of about 10∼500 nm can be added, as a conductor to the electrode. In these electrodes the conduction network is formed by the carbon powders residing in the void of active powder beds and interconnected by particle to particle point contacts. In order for the particles to function as a conductive matrix of electrode, contacts of active material particles should not be disconnected between collector and the forefront particles of electrode. However, these carbon materials have a lower electrical conductivity of about one thousandth compared to that of metal. And, since carbon particles in the electrode are electrically connected through multitude of point contacts, internal resistance within the electrode is fairly high.

The process for forming electron passages by a particle type conductor depends solely on the probability of encounter among particles. For the making of electron passages by addition of the powder to be successful, the probability of encounter must be high enough to reach a significant level. Also, conductivity through electron passages by point contacts of particles is proportional to the increase of contacting frequency. A good conductivity can not be obtained without forming multiplicity of electron passages.

In order to achieve these objectives under the prior art, a significant volumetric content of conductive additive has been used. Simple geometric calculations and common practice in Li-ion battery industry indicates the volume fraction of conductive carbon should range somewhere between about 6 to about 15 volume percent of the total electrode volume. Furthermore, the conductive particles must be fine enough to fit into the openings of active particle layer, resulting in the use of carbons with a small particle size and a large specific surface area. Naturally the electrode active surface area escalates unnecessarily, resulting in overall increase in reaction with electrolytes and organic solvents. The increased reactions can manifest as an irreversible loss of anode capacity, gradual oxidation and consumption of electrolyte on the cathode, which cause capacity decline during cycling, and an increased threat to battery safety by gas evolution and exothermic solvent oxidation.

In view of manufacturing the electrodes, the fine carbon particulates cause poor dispersion, which makes it difficult to get uniformly dispersed slurry. Further, the excess of conductors which do not contribute in forming electron passages remains inside the electrode and constitutes an inactive volume, and thus limits the capacity of the battery and the energy density.

### SUMMARY OF THE INVENTION

It is therefore an object of the invention to provide a rechargeable lithium ion battery comprising an electrode made of a fibriform electrical conductor of micron scale, and a manufacturing method of the same.

One strand of fiber made of active material particles has the same effects as those particles in a row. The surface area per unit volume of fibers is small, and the electric conductivity toward horizontal direction in fiber is superior to that of powders. Further, the mechanical strength of fiber is extraordinarily superior to that of the particles in a row.

The present invention provides a rechargeable lithium ion battery comprising a cathode electrode having an active material, a binder and a current collector; an anode electrode having an active material, a binder and a current collector, an electrolyte(s); and a separator, wherein at least one of said cathode electrode and anode electrode comprises an electrically-conductive additive in the amount of about 0.1 to about 50% wt. of the electrode active material in the electrode, and said additive contains a metal- or carbon-based fiber with diameter from about 0.1 to about 25 microns (25 µm), and an aspect ratio of from about 4 to about 2500.

### BRIEF DESCRIPTION OF DRAWING

The present invention will be described with reference to the accompanying drawings of which:

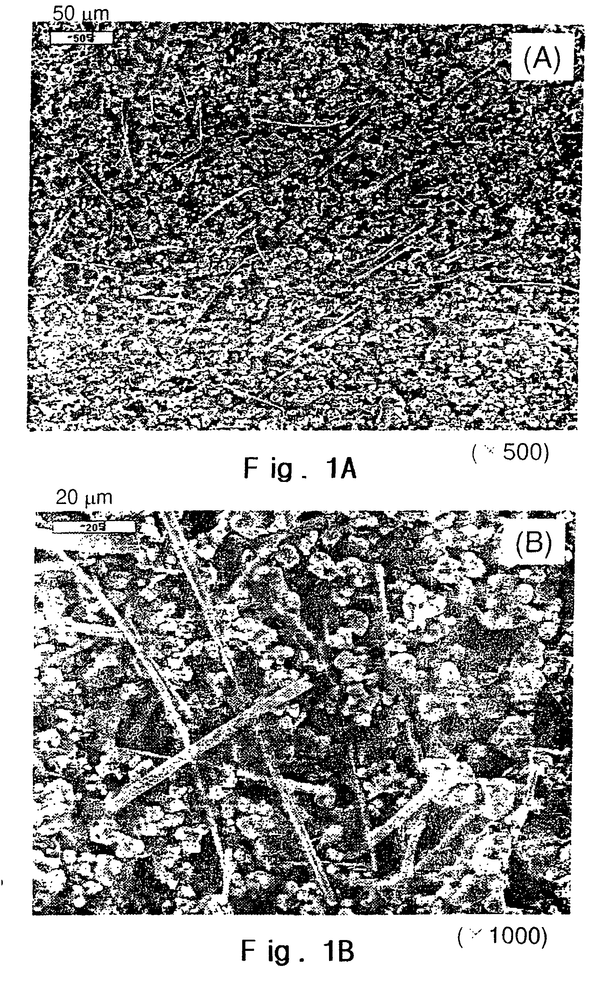

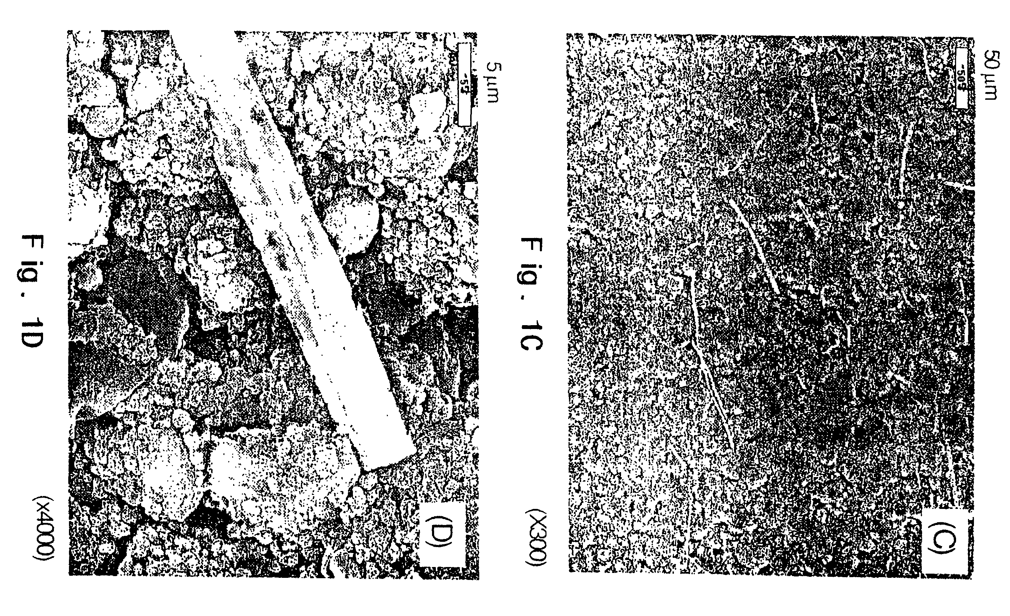

Figure 1 shows scanning electron micrographs of metal fiber-containing electrodes, in which (A) is of LiCoO₂ cathode with 4 wt% of stainless steel 316L fiber; (B) is of LiCoO₂ cathode with 7 wt% of fiber; (C) and (D) are of MCMB anode with 0.5% of 316L fiber. The metal fibers are about 2 µm in diameter.

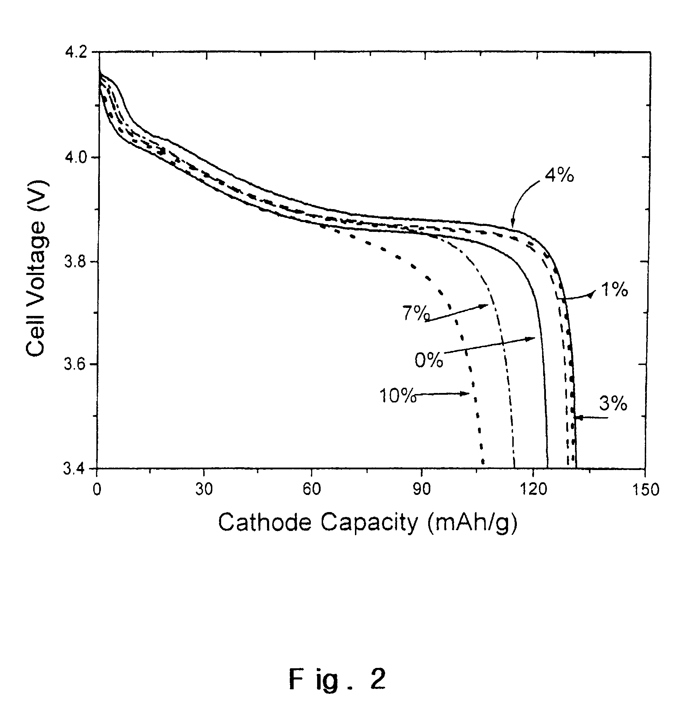

Figure 2 shows an influence of metal fiber addition on cathode discharge profile. The cathodes are composed of LiCoO₂ particles, PVdF binder, graphite conductive additive, and indicated weight percentage of metal fiber. Electrodes were discharged at 1/40 C rate. Voltage limit: 3.0 to 4.2 Volts vs. Li/Li⁺.

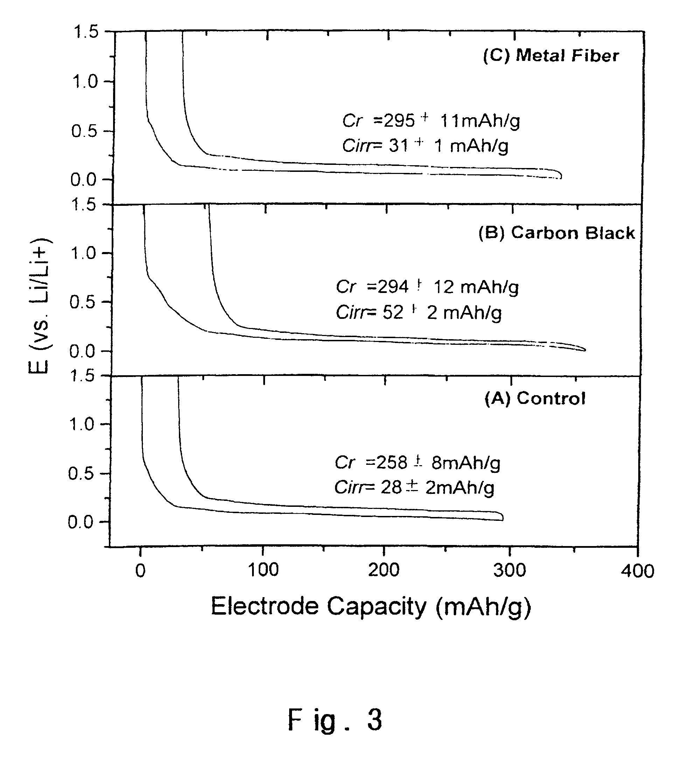

Figure 3 shows an impact of conductive additives on anode reactions with lithium ion. The volume fraction of conductive additives were maintained at approximately 0.8%. The electrodes were cycled at 0.1C rate between 0.01 and 1.5 V(vs. Li/Li⁺). At least three electrode specimens were tested and the reversible and irreversible capacities calculated and appeared in the Figure. Cr and Cirr are defined as reversible and irreversible lithium ion uptake, respectively.

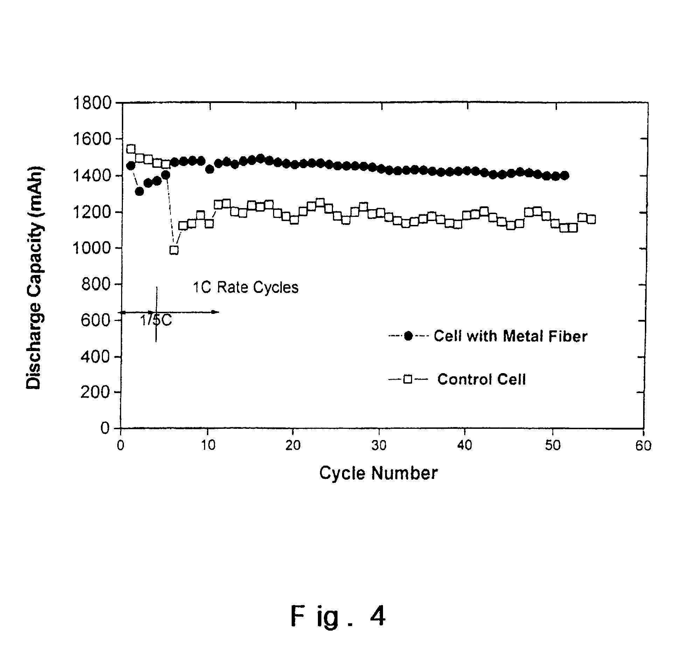

Figure 4 shows battery capacity behaviors with cycling. The particular cell with metal fiber, shown here, was fabricated using 316L fiber-containing anode(2% w/w) and regular cathode.

### DETAILED DESCRIPTION OF THE INVENTION

The battery prepared by the method of the present invention has a low electrical resistance and a high-rate capability.

In order to achieve the objectives of the present invention, the lithium secondary battery provided according to the present invention comprises a cathode electrode, an anode electrode, an electrolyte and a separator.

In the battery of the present invention, the cathode electrode comprises: an active material which is capable of reacting reversibly with lithium ion; a compound having a structure in which reaction products of lithium ion with an electrolyte salt or an electrolyte solvent can be deposited or precipitated; or a compound having a structure with which lithium ion can be intercalated. Examples of such active materials include a compound represented by: Li_{1-X}A_{X}Ni_{1-Y}B_{Y}O₂ (where, A = alkaline metal or alkaline earth metal, B = transition metal, 0 ≤ x ≤ 0.1, 0 ≤ y ≤ 1.0); LiMn_{2-y}M_{Y}O₄ (where, M= Fe, Co, Ni: 0.02 ≤ y ≤ 0.3); Li_{1-X}Ni_{1-Y}B_{Y}O₂ (where, B= transition metal, 0 ≤ x ≤ 0.1, 0 ≤ y ≤ 1.0); NbSe₃; LiₓV₂O₅; or LiₓV₆O₁₃ (where, 0 ≤ x ≤ 3.0).

Also, the cathode electrode comprises an additive comprising an electron conductive fiber of micron scale, a collector comprising metal and carbon materials, and an adhesive fixing the active materials to the collector.

The anode electrode comprises a material, as an active material, which is capable of reacting reversibly with lithium ion; a compound having a structure in which reaction products of lithium ion with an electrolyte salt or an electrolyte solvent can be deposited or precipitated; or a compound having a structure with which lithium ion can be intercalated. The anode also comprises an additive comprising an electron conductive fiber of micron scale, an adhesive comprising polymer material, and a collector consisting of metal and carbon materials.

Among the active materials for the anode electrode, compounds having a structure with which a lithium ion can be intercalated is classified into carbon group compounds and non-carbon group compounds. The carbon group compounds are further classified into graphite group compounds and non-graphite group compounds. Examples of the graphite group compounds include flake type natural or synthesized graphite and a graphite based on mesophase pitch such as MCF, MCMB and the like. Examples of non-graphite group compounds include an amorphous carbon group material thermally treated at 800∼1800°C, such as petroleum coke, soft carbon, hard carbon, polyparaphenylene or polyacenic compounds, and compounds based on coal. Examples of non-carbon group materials include metal oxides, metal sulfides, and metal selenides, also called dichalcogenides. Examples of metal oxides include SnO₂, WO₂, MoO₂ and the like. Examples of metal sulfides include TiS2, MoS2 and the like. Examples of metal selenides include NbSe3 and the like. While one or more active materials can be used, the kind of active materials is not limited in the present invention.

Conductive fibrous additive to the cathode and anode electrodes includes metal fiber and carbon fiber. Examples of metal fiber include iron, nickel, copper, zinc, titanium, aluminum, silver, gold, platinum, alloys such as iron-chromium alloy, iron-chromium-nickel alloy (popular name: stainless steel), and aluminum alloy such as aluminum-copper, aluminum-manganese, aluminum-magnesium, aluminum-silicon-magnesium. Examples of carbon fiber include fibers based on synthesized graphite, active carbon or vapor-grown whisker. The diameter and the aspect ratio of preferable fibriform depend on the particle size distribution of the electrode active materials. In general, a fiber with diameter from about 0.1 microns (0.1 µm) to about 25 microns (25 µm) and the aspect ratio of about 4 to about 2500 is preferable.

These fibers could be used without further treatment, or with surface treatment to increase adhesion strength. Examples of suitable surface treating methods include surface oxidation/reduction reaction, and coating by an organic compound or polymeric compound. Skilled person in the art can easily prepare fiber embedded electrode structures according to this invention regardless of kinds of fiber materials or the process for pretreatment of the material. This means that the present invention is not limited to any specific types of fibers or the process for preparation of the fibriform.

Slurry for applying to an electrode is prepared by dispersing a conductive fibriform (first conductive additive) and electrode active materials to a solvent, to which a proper organic binder, or binder dissolved in organic solvent is added. At this time, carbon black other than fibriform or other kinds of carbonaceous powder (second conductive additive) can be mixed together in order to satisfy various objects considered in designing an electrode. The binder (of the present invention) includes polyvinylidene fluoride group, PVC group, PMMA group, SBR group, SBR Latex group, PTFE (polytetrafluoroethylene) group, and rubber type polymer.

The organic solvent of the present invention is volatile and is not remained in the electrode after drying the electrode. Though nmp (n-methyl-2-pyrrolidone) or acetone and the like are used in general, but organic solvent is not limited in the present invention.

After the prepared slurry has been applied thinly on a current collector, the slurry is heated in an oven to evaporate organic solvents. Thus, the electrode is completed. If necessary, the volume of an electrode could be decreased through compaction by roll press. Examples of a current collector include metal plate, metal foil, metal mesh, metal gauze, perforated metal foil, sintered metal fiber mesh, carbon paper, carbon sheet, carbon coated metal and the like. The present invention is not limited by the geometrical structure, the elemental composition of the current collector.

The conductive fibriform, alone or along with a second conductor powder, can be dispersed in an organic solvent to facilitate dispersion of the slurry prior to preparing slurry mixing. Uniformly mixed slurry can be prepared by physical stirring or by ultrasonic dispersion.

The weight percentage of the conductive fibriform in the slurry can be from about 0.05% to about 50% of total weight of slurry, or from about 0.1% to about 50% of electrode total weight of active materials. In the case of using a secondary conductor powder, the rate of the powder weight to fibriform weight could change from about 0.01: 1 to about 1:0.01. However, preferable ratio of powder is within the range from about 0.1% to about 20% of the weight of active materials.

A cylindrical battery is provided using the electrode prepared as described above. In accordance with the known process, cathode and anode electrode terminals are welded and wound with a separator therebetween to prepare Jelly Roll. It is intercalated to a cylinder of 18650 scale. The electrode terminals are welded to the cylinder and its lid and then an electrolyte is filled and sealed up so as to complete the battery.

### DESCRIPTION OF THE PREFERRED EMBODIMENT

The present invention will be illustrated in greater detail by way of the following examples. The examples are given for illustration of the invention and are not intended to be limiting thereof.

### Example 1

PVdF was dissolved in nmp at a ratio of 9:1 to prepare an adhesive solution. LiCoO₂ (Seimi) and graphite (Lonza, KS6) were added to the solution, and mixed to prepare the slurry (Slurry A). The composition of the slurry A was LiCoO2:graphite: PVdF=91:6:3. To the slurry A, a stainless steel fiber having a diameter of about 1.5 µm and a length/diameter ratio of from about 100 to about 1000 was added, dispersed, and mixed to prepare a slurry (Slurry B). The slurry B was applied on an aluminium foil and air-dried for about 30 minutes at 130°C to dry the electrode.

The dispersion of metal fiber was examined by scanning electron microscopy and the surface photographs are shown in Figure 1.

On the contrary to a common disbelief that fibrous materials are difficult to disperse within viscous media, the individual metal fibers were remarkably well distributed in the electrodes as shown in Figure 1.

### Example 2

PVdF of 7.0g was dissolved to nmp of 65 ml, a synthesized graphite (MCMB) of 93.0g was added, stirred and dispersed (mixture A). a stainless steel (316L) fiber of 0.5g having a diameter of 1.5 µm and a length of about 0.5∼1.0 mm was added to the mixture A and dispersed (mixture B). The composition of the mixture B less solvent was graphite: metal fiber: binder (PVdF)=91.2:2.0:6.8. After applying the mixture B on a copper foil at a thickness of 150 microns (= 150 µm), it was first dried for 5 hours at an ambient temperature, dried again for 12 hours at about 130 °C, and then vacuum dried for 30 minutes at 130 °C. The micrographs of the electrode surface are also shown in figure 1.

### Example 3

The electrode prepared as in example I was used as a positive electrode, each of lithium foils was used as a negative electrode and reference electrode, 1M LiClO₄/EC+DEC was used as an electrolyte solution. The cell was constructed. After construction, voltage was stable as about 3.2 V

Discharging capacity according to each of cut-off voltage was shown in Table 1. The results of Fig. 2 and Table 1 illustrate that capacity of the electrode was considerably increased when a fibrous conductor was added. This result is because an efficient electron delivering passage was formed inside of the electrode. This allows a portion of electrode active materials once-isolated electrically to take part in cell reaction. Also, capacity according to cut-off voltage was shown in Table 1.

**Table 1.**

| Changes of capacities of electrodes according to addition of a fibrous conductor | | | | | |
|---|---|---|---|---|---|
| Content of Metal Fiber (%) | Capacities of Electrodes according to Cut-off Voltages (mAh/g) | | | | |
| | 4.0V | 3.8V | 3.6V | 3.3V | 3.0V |
| 0 | 18 | 115 | 123 | 124 | 123 |
| 1 | 20 (11%) | 124(8%) | 130(6%) | 131(6%) | 132(6%) |
| 3 | 24 (33%) | 123(7%) | 129(5%) | 131(6%) | 131(6%) |
| 4 | 30(67%) | 128(11%) | 132(7%) | 133(7%) | 134(7%) |
| (Values in parentheses are increasing ratios of capacities of electrodes) | | | | | |

This increasing of capacity means that the utility of active materials in the electrode is increased. Also, it means that active materials are not used to 100% before a fibrous metal conductor is added. It is understood that electron delivery by graphite particles as a conventional conductor is insufficient so that active materials partially isolated is electrically connected by metal fiber to take part in cell reaction. In the meantime, capacity is increased in proportion to the higher cut-off voltage of discharging curve. It means that IR drop of the electrode is decreased in proportion to the amount of metal added.

### Example 4

The electrode prepared as in example 2 was used as a positive electrode, lithium foil was used as a negative electrode, and Celgard 1400 membrane was used as a separator. This layered structure and 1M LiPE6/EC+DEC as an electrolyte solution was used to make a cell. After completion of construction of the cell, voltage of an open circuit was about 3.2 V.
An intercalation/deintercalation of lithium ion was repeated using a current density per unit area of 0.31 mA/cm². The relationship between capacity and voltage of cell, and deintercalation capacity of carbon electrode are shown in Table 2, Table 3, Fig. 3.

**Table 2.**

| Changes of high-speed discharging capacities according to addition of a fibrous conductor | | | | | |
|---|---|---|---|---|---|
| (cut-off voltage = 1.5 V) | | | | | |
| Types of Electrode | Capacities At Different Discharging Ratios (mAh/g carbon) | | | | |
| | 0.31 | 1.55 | 3.1 | 4.65 | 6.2mAh/cm² |
| Electrode in which a fiber is added | 300 | 274 | 229 | 265 | 139 |
| Electrode in which a fiber is not added | 281 | 257 | 230 | 149 | 98 |

**Table 3.**

| Changes of high-speed discharging capacities according to addition of a fibrous conductor | | | | | |
|---|---|---|---|---|---|
| (cut-off voltage = 0.9 V) | | | | | |
| Types of Electrode | Capacities At Different Discharging Ratios (mAh/g carbon) | | | | |
| | 0.31 | 1.55 | 3.1 | 4.65 | 6.2mAh/cm² |
| Electrode in which a fiber is added | 297 | 272 | 224 | 174 | 128 |
| Electrode in which a fiber is not added | 279 | 256 | 226 | 126 | 73 |

The irreversible lithium ion uptake as well as reversible capacity from anodes have been examined and displayed in Figure 3. Compared to a control that contains no conductive additives, the fiber-containing electrode exhibited about 14% increase in reversible capacity, while the increase in irreversible reaction is only by 2 mAh/g. Carbon black-added anode with comparable volumetric quantity to fibers also exhibits similar level of reversible capacity, but only at the expense of almost twofold increase in irreversible capacity toll.

The above results indicate that the contribution of metal fiber to the increase in the irreversible lithium uptake is almost none. The contribution from fiber to the electrode active area has been calculated and found negligible while the carbon black at the comparable volume content almost quadruples the electrode area. The increase in the reversible capacity is, again as in the case of cathodes, attributed to improved utilization of MCMB particles and lower IR drop that prevents the electrode from reaching to the cutoff potential prematurely.

### Example 5

Metal fibrous conductor (a first conductor) was used along with a conventional powder type conductor (a second conductor). Nickel fiber of 0.4g having a diameter of 2µm and a length of 0.5 nm, carbon black of 0.4g, synthesized graphite (SFG15, Timcal) of 0.9g and solvent (nmp) of 20g were mixed and dispersed uniformly, and then mixed with 13 wt% PVdF/nmp solution of 10g and stirred by a pestle to give an uniform slurry.

The composition of the mixture excepts of the above described solvent was graphite: metal fiber: carbon black: binder (PVdF)=81:3.6:3.6:11.8. After applying the mixture on a copper foil at a thickness of 100 microns (100 µm), the same processes as described in Example 2 were repeated to prepare the cell. It was conformed that the adhering strength of the electrode active materials was more increased. A high-speed discharging capacity was 8.3 mA/cm2 which is 50% of a total capacity.

### Example 6

After the mixture B prepared as in Example 1 was applied on Cu Exmet (mesh type collector) at a thickness of about 200 µm, the same processes as described in Example 2 were repeated to prepare the cell. It was conformed that the adhering strength of the electrode active materials was more increased. A high-speed discharging capacity was 8.3 mA/cm2, which is 50% of a total capacity.

### Example 7

Carbon whisker being undergone graphitization reaction of 0.5g having a diameter of 5 µm and a length of 1 mm and a stainless steel fiber of 0.2g having a diameter of 0.5 µm and a length of 0.5 mm, MCMB of 9.0g and a solvent (nmp) of 17g were uniformly dispersed, mixed with 13wt% PVdF/nmp solution of 8.0g and stirred to prepare a slurry. After the mixture was applied on Cu foil at a thickness of about 100 microns (100 µm), the drying process as described in Example 2 was performed to prepare the electrode for constructing a cell. The electrode prepared was appeared to have a very strong adhering strength. When recharging/discharging steps were repeated at 0.3 mA/cm², a capacity was maintained to about 95% of an initial capacity after 100 times of repetition.

### Example 8

In order to verify the efficacy of fibrous conductive additives in real Li-ion battery applications, commercial-size cylindrical cells were manufactured using 316L fiber-added electrodes. The 18650 cells were compared at a nominal capacity of *ca*. 1400 mAh with all the electrode process variables and physical characteristics adjusted accordingly. The assembled batteries were subjected to cycle tests in the following order; i) preconditioning at a 1/10C rate for the first charge and discharge sequence, ii) followed by four 1/5C rate cycles, and iii) subsequent 1C rate cycles with a restriction on the total charge time, which was 2.5 hours in the experiments shown in the Figure 5. During the 1C rate charge constant current mode with voltage limit of 4.1 V was applied.

For the first five cycles, where the charge/discharge current is low, the capacities for the two cells are similar. But when the current was raised to a 1C rate, it was evident that the capacity of the control cell sharply drops by more than 200 mAh and do not keep up with the metal fiber-added counterpart.

## Claims

1. A rechargeable lithium ion battery comprising a cathode electrode having an active material, a binder and a current collector; an anode electrode having an active material, a binder and a current collector, an electrolyte(s); and a separator, wherein at least one of said cathode electrode and anode electrode comprises an electrically-conductive additive in the amount of about 0.1 to about 50% wt. of the electrode active material in the electrode, and said additive contains a metal- or carbon-based fiber with diameter from about 0.1 to about 25 µm, and an aspect ratio of from about 4 to about 2500.

2. The battery according to claim I, wherein said metal-based fiber is prepared from material selected from the group consisting of iron, nickel, copper, zinc, titanium, aluminium, silver, gold, platinum, ion-chromium alloy, and aluminium alloy.

3. The battery according to claim I, wherein said carbon-based fiber based on a synthesized graphite and an active carbon or a gas phase grown whisker type carbon fiber.

4. The battery according to claim I, wherein said cathode electrode active material is selected from the group consisting of a compound capable of reacting reversibly with lithium ion, a compound having a structure that a lithium ion can be intercalated, an organic sulfur compound, and a polymeric organic sulfur compound.

5. The battery according to claim I, wherein said cathode electrode active material comprises a compound represented by:
Li_{1-X}A_{X}Ni_{1-Y}B_{Y}O₂ (where A = alkaline metal or alkaline earth metal,
B = transition metal,
0 ≤ x ≤ 0.1, 0 ≤ y ≤ 1.0) ;
LiMn_{2-Y}M_{Y}O₄ (where M = Fe, Co, Ni : 0.02 ≤ y ≤ 0.3);
Li_{1-X}Ni_{1-Y}B_{Y}O₂ (where B = transition metal, 0 ≤ x ≤ 0.1, 0 ≤ y ≤ 1.0);
NbSe₃
Li_{X}V₂O₅; or
Li_{X}V₆O₁₃ (where 0 ≤ x ≤ 3.0).

6. The battery according to claim I, wherein said anode electrode active material is selected from the group consisting of a compound capable of reacting reversibly with a lithium ion, a compound having a structure in which reaction products of a lithium ion with an electrolyte salt or an electrolyte solvent are capable of deposition or precipitation, a compound having a structure with which a lithium ion can be intercalated, lithium metal, lithium alloy, and carbon.

7. The battery according to claim I, wherein said metal-based fiber is prepared from a material selected from the group of:
a) a metal comprising iron, nickel, copper, zinc, titanium, aluminium, silver, gold or platinum
b) ion-chromium-nickel alloy; and
c) aluminium alloy including aluminium-copper, aluminium-manganese, aluminium-magnesium, and aluminium-silicon-magnesium.

8. The battery according to claim I, wherein said electrolyte comprises a lithium salt selected from the group consisting of LiPF₆, LiBF₄, LiClO₄, LiAsF₆, LiSbF₆, LiN(CF₃SO₂)₂, LiCF₃SO₂, and LiN(SO₂C₂F₅)₅.

9. The battery according to claim I, wherein said electrolyte comprises a solvent selected from the group consisting of ethylene carbonate, propylene carbonate, vinylene carbonate, dimethyl carbonate, buthylene carbonate, γ-butyrolactone, diethyl carbonate, ethylmethyl carbonate, N,N-dimethyl acetamid, dimethoxyethane and a mixture thereof.

10. The battery according to claim I, wherein said separator is a microporous polymeric membrane or nonfabric.

11. The battery according to claim I, wherein said metal-based fiber has a diameter from about 0.5 microns to about 4 microns, and an aspect ratio of from about 4 to about 2500.

12. The battery according to claim I, wherein said additive is a mixture of two or more different kind fibrous additives.

13. The battery according to claim I, wherein content of said additive is from about 0.1% to about 10% by weight of electrode active materials.

14. A method of manufacturing a rechargeable lithium ion battery comprising the steps of:
a) preparing a suspension by adding an additive of about 0.1% to about 50% by weight to electrode active materials, said additive consisting of a material selected from a group of iron, nickel, copper, zinc, titanium, aluminium, silver, gold, platinum, ion-chromium alloy, ion-chromium-nickel alloy, and aluminium alloy and said additive being a fibriform having a diameter from about 0.5 to about 25 µm and an aspect ratio of from about 4 to about 2500;
b) applying the suspension to a collector; and
c) heating the collector obtained in step b).

## Patentansprüche

1. Wiederaufladbare Lithium-lonenbatterie enthaltend eine Kathodenelektrode, die ein aktives Material, ein Bindemittel und einen Stromkollektor aufweist, eine Anodenelektrode, die ein aktives Material, ein Bindemittel und einen Stromkollektor, einen Elektrolyten und einen Separator aufweist, wobei mindestens eine der genannten Kathoden- und Anodenelektroden ein elektrisch leitfähiges Additiv von ca. 0,1 bis ca. 50 Gew.-% der aktiven Elektrodenmasse in der Elektrode enthält und das genannte Additiv eine Faser auf Metall- oder Kohlenstoffbasis mit einem Durchmesser von ca. 0,1 bis ca. 25 Mikrometern und einem Längenverhältnis von ca. 4 bis ca. 2.500 enthält.

2. Batterie nach Anspruch 1, wobei die genannte Faser auf Metallbasis hergestellt wird aus einem Material, ausgewählt aus der Gruppe Eisen, Nickel, Kupfer, Zink, Titan, Aluminium, Silber, Gold, Platin, einer Eisen-Chrom-Legierung und einer Aluminium-Legierung.

3. Batterie nach Anspruch 1, wobei die genannte Faser auf Kohlenstoffbasis auf einem synthetischen Graphit und einem aktiven Kohlenstoff oder einer Carbonfaser vom Typ eines in der Gasphase gewachsenen Faserkristalls basiert.

4. Batterie nach Anspruch 1, wobei die genannte aktive Kathodenelektrodenmasse ausgewählt ist aus der Gruppe einer Verbindung, die reversibel mit Lithium-lonen reagieren kann, einer Verbindung mit einer solchen Struktur, dass ein Lithium-Ion eingelagert werden kann, einer organischen Schwefelverbindung und einer polymeren organischen Schwefelverbindung.

5. Batterie nach Anspruch 1, wobei das genannte aktive Kathodenelektrodenmaterial eine Verbindung enthält, die dargestellt wird durch
Li_{1-X}A_{X}Ni_{1-Y}B_{Y}O₂ (wobei A = Alkalimetall oder Erdalkalimetall,
B = Übergangsmetall,
0 ≤ x ≤ 0,1, 0 ≤ y ≤ 1,0);
LiMn_{2-Y}M_{Y}O₄ (wobei M = Fe, Co, Ni : 0,02 ≤ y ≤ 0,3);
Li_{1-X}Ni_{1-Y}B_{Y}O₂ (wobei B = Übergangsmetall, 0 ≤ x ≤ 0,1, 0≤ y ≤ 1,0);
NbSe₃
Li_{X}V₂O₅; oder
Li_{X}V₆O₁₃ (wobei 0 ≤ x ≤ 3,0).

6. Batterie nach Anspruch 1, wobei das genannte aktive Anodenelektrodenmaterial ausgewählt ist aus der Gruppe einer Verbindung, die reversibel mit Lithium-Ionen reagieren kann, einer Verbindung mit einer solchen Struktur, dass Reaktionsprodukte von einem Lithium-Ion mit einem Elektrolytsalz oder einem Elektrolytlösemittel abgeschieden oder ausgefällt werden können, einer Verbindung mit einer solchen Struktur, dass ein Lithium-Ion eingelagert werden kann, Lithiummetall, Lithium-Legierungen und Kohlenstoff.

7. Batterie nach Anspruch 1, wobei die genannte Faser auf Metallbasis aus einem Material hergestellt wird, ausgewählt aus der Gruppe von
a) einem Metall, das Eisen, Nickel, Kupfer, Zink, Titan, Aluminium, Silber, Gold oder Platin enthält
b) einer lon-Chrom-Nickel-Legierung; und
c) einer Aluminium-Legierung, inklusive Aluminium-Kupfer, Aluminium-Mangan, Aluminium-Magnesium und Aluminium-Silizium-Magnesium.

8. Batterie nach Anspruch 1, wobei der genannte Elektrolyt ein Lithium-Salz enthält, ausgewählt aus der Gruppe LiPF₆, LiBF₄, LiClO₄, LiAsF₆, LiSbF₆, LiN(CF₃SO₂)₂, LiCF₃SO₂ und LiN(SO₂C₂F₅)₅.

9. Batterie nach Anspruch 1, wobei der genannte Elektrolyt ein Lösemittel enthält, ausgewählt aus der Gruppe von Ethylencarbonat, Propylencarbonat Vinylencarbonat, Dimethylcarbonat, Buthylencarbonat, γ-Butyrolacton, Diethylcarbonat, Ethylmethylcarbonat, N,N-Dimethylacetamid, Dimethoxyethan und einer Mischung daraus.

10. Batterie nach Anspruch 1, wobei der genannte Separator eine mikroporöse Polymermembran oder ein Nicht-Gewebe ist.

11. Batterie nach Anspruch 1, wobei die genannte Faser auf Metallbasis einen Durchmesser von ca. 0,5 Mikrometern bis ca. 4 Mikrometern und ein Längenverhältnis von ca. 4 bis ca. 2.500 besitzt.

12. Batterie nach Anspruch 1, wobei das genannte Additiv eine Mischung aus zwei oder mehreren verschiedenen faserartigen Additiven ist.

13. Batterie nach Anspruch 1, wobei der Inhalt des genannten Additivs einen Anteil von ca. 0,1 % bis ca. 10 % des Gewichts der aktiven Elektrodenmaterialien hat.

14. Verfahren zur Herstellung einer wiederaufladbaren Lithium-Ionenbatterie, das die folgenden Schritte aufweist:
a) Bereitstellung einer Suspension durch Hinzufügen eines Additivs von ca. 0,1 % bis ca. 50 % des Gewichts der aktiven Elektrodenmaterialien, das genannte Additiv bestehend aus einem Material ausgewählt aus der Gruppe von Eisen, Nickel, Kupfer, Zink, Titan, Aluminium, Silber, Gold Platin, einer Eisen-Chrom-Legierung, einer Eisen-Chrom-Nickel-Legierung und einer Aluminium-Legierung und das genannte faserartige Additiv einen Durchmesser von ca. 0,5 bis 25 Mikrometern und ein Längenverhältnis von ca. 4 bis ca. 2.500 hat;
b) Aufbringen der Suspension auf einen Kollektor; und
c) Erhitzen des Kollektors, der in Schritt b) erhalten wurde.

## Revendications

1. Batterie à ion lithium rechargeable, comprenant une électrode cathode ayant une matière active, un liant et un collecteur de courant ; une électrode anode ayant une matière active, un liant et un collecteur de courant, un ou des électrolytes ; et un séparateur, dans laquelle au moins l'une de ladite électrode cathode et de ladite électrode anode comprend un additif conducteur de l'électricité dans la quantité d'environ 0,1 à environ 50% en poids de la matière active d'électrode dans l'électrode, et ledit additif contient une fibre à base métallique ou à base de carbone, ayant un diamètre d'environ 0,1 à environ 25 µm et un rapport d'allongement d'environ 4 à environ 2500.

2. Batterie selon la revendication 1, dans laquelle ladite fibre à base métallique est préparée à partir d'une matière choisie dans le groupe constitué par le fer, le nickel, le cuivre, le zinc, le titane, l'aluminium, l'argent, l'or, le platine, un alliage fer-chrome et un alliage d'aluminium.

3. Batterie selon la revendication 1, dans laquelle ladite fibre à base de carbone est à base d'un graphite synthétisé et d'un charbon actif ou une fibre de carbone de type barbe de croissance en phase gazeuse.

4. Batterie selon la revendication 1, dans laquelle ladite matière active d'électrode cathode est choisie dans le groupe constitué par un composé capable de réagir de façon réversible avec un ion lithium, un composé ayant une structure dans laquelle un ion lithium peut être intercalé, un composé organique du soufre et un composé organique polymère du soufre.

5. Batterie selon la revendication 1, dans laquelle ladite matière active d'électrode cathode comprend un composé représenté par :
Li₁₋ₓAₓNi_{1-y}B_{y}O₂ (où A = métal alcalin ou métal alcaline-terreux ;
B = métal de transition ;
0 ≤ x ≤ 0,1 ; 0 ≤ y ≤ 1,0) ;
LiMn_{2-y}M_{y}O₄ (où M = Fe, Co, Ni ; 0,02 ≤ y ≤ 0,3) ;
Li₁₋ₓNi_{1-y}B_{y}O₂ (où B = métal de transition, 0 ≤ x ≤ 0,1, ; 0 ≤ y ≤ 1,0) ;
NbSe₃
LiₓV₂O₅ ; ou
LiₓV₆O₁₃ (où 0 ≤ x ≤ 3,0).

6. Batterie selon la revendication 1, dans laquelle ladite matière active d'électrode anode est choisie dans le groupe constitué par un composé capable de réagir de façon réversible avec un ion lithium, un composé ayant une structure dans laquelle des produits de réaction d'un ion lithium avec un sel électrolyte ou un solvant électrolyte sont aptes à se déposer ou à précipiter, un composé ayant une structure dans laquelle un ion lithium peut être intercalé, le lithium métallique, un alliage de lithium et le carbone.

7. Batterie selon la revendication 1, dans laquelle ladite fibre à base métallique est préparée à partir d'une matière choisie dans le groupe constitué par :
(a) un métal comprenant le fer, le nickel, le cuivre, le zinc, le titane, l'aluminium, l'argent, l'or ou le platine ;
(b) un alliage fer-chrome-nickel ; et
(c) un alliage d'aluminium comprenant les alliages aluminium-cuivre, aluminium-manganèse, aluminium-magnésium et aluminium-silicium-magnésium.

8. Batterie selon la revendication 1, dans laquelle ledit électrolyte comprend un sel de lithium choisi dans le groupe constitué par LiPF₆, LiBF₄, LiClO₄, LiAₛF₆, LiSbF₆, LiN (CF₃SO₂)₂, LiCF₃SO₂ et LiN(SO₂C₂F₅)₅.

9. Batterie selon la revendication 1, dans laquelle ledit électrolyte comprend un solvant choisi dans le groupe constitué par le carbonate d'éthylène, le carbonate de propylène, le carbonate de vinylène, le carbonate de diméthyle, le carbonate de butylène, la γ-butyrolactone, le carbonate de diéthyle, le carbonate d'éthyle et de méthyle, le N,N-diméthyl acétamide, le diméthoxyéthane et les mélanges de ceux-ci.

10. Batterie selon la revendication 1, dans laquelle ledit séparateur est une membrane polymère microporeuse ou un non-tissé.

11. Batterie selon la revendication 1, dans laquelle ladite fibre à base métallique a un diamètre d'environ 0,5 micron à environ 4 microns, et un rapport d'allongement d'environ 4 à environ 2500.

12. Batterie selon la revendication 1, dans laquelle ledit additif est un mélange d'additifs fibreux de deux sortes différentes ou davantage.

13. Batterie selon la revendication 1, dans laquelle la teneur dudit additif est d'environ 0,1% à environ 10% en poids des matières actives d'électrodes.

14. Procédé de fabrication d'une batterie à ion lithium rechargeable, comprenant les étapes consistant à :
(a) préparer une suspension par addition d'un additif d'environ 0,1% à environ 50% en poids à des matières actives d'électrodes, ledit additif consistant en une matière choisie dans le groupe constitué par le fer, le nickel, le cuivre, le zinc, le titane, l'aluminium, l'argent, l'or, le platine, un alliage fer-chrome, un alliage fer-chrome-nickel et un alliage d'aluminium, et ledit additif étant une forme fibreuse ayant un diamètre d'environ 0,5 à environ 25 µm et un rapport d'allongement d'environ 4 à environ 2500 ;
(b) appliquer la suspension sur un collecteur ; et
(c) chauffer le collecteur obtenu à l'étape (b).
